# EUROPÄISCHE PATENTSCHRIFT

(11) **EP 1 269 038 B1**
(45) Veröffentlichungstag und Bekanntmachung des Hinweises auf die Patenterteilung: **19.04.2006**
(21) Anmeldenummer: 01927805.0
(22) Anmeldetag: 26.03.2001
(51) Int. Cl.: F16D 65/21

(54) **BETÄTIGUNGSEINHEIT MIT EINEM GEWINDETRIEB, EINEM PLANETENGETRIEBE UND EINEM VON DIESEN BEEINFLUSSTEN BETÄTIGUNGSELEMENT**
ACTUATING UNIT WITH A THREADED PINION, A PLANETARY GEAR AND ACTUATING ELEMENT INFLUENCED THEREBY
UNITE D'ACTIONNEMENT COMPORTANT UN ORGANE D'ENTRAINEMENT FILETE, UN ENGRENAGE PLANETAIRE ET UN ELEMENT D'ACTIONNEMENT INFLUENCE PAR CES DERNIERS

(30) Priorität: 27.03.2000 DE 10015228; 23.12.2000 DE 10064901
(43) Veröffentlichungstag der Anmeldung: 02.01.2003
(73) Patentinhaber: Continental Teves AG & Co. oHG, 60488 Frankfurt (DE); Schaeffler KG, 91074 Herzogenaurach (DE)
(72) Erfinder: JUNGBECKER, Johann, 55576 Badenheim (DE); SCHMITT, Stefan, 65343 Eltville (DE); SCHWARZ, Ralf, 69118 Heidelberg (DE); HOFFMANN, Oliver, 60486 Frankfurt am Main (DE); RIETH, Peter, 65343 Eltville (DE); NELL, Joachim, 63452 Hanau (DE); BACKES, Wendelin, 63939 Wörth (DE); ZERNICKEL, Alexander, 91074 Herzogenaurach (DE); HARTMANN, Juergen, 91468 Gutenstetten (DE); GRAU, Ulrich, 91448 Emskirchen (DE); DORSCH, Werner, 96114 Hirschaid (DE)
(86) Internationale Anmeldenummer: PCT/EP2001/003420
(87) Internationale Veröffentlichungsnummer: WO 2001/073312

(56) Entgegenhaltungen:
- WO-A-00/02302
- WO-A-00/45064
- WO-A-99/60285

## Beschreibung

Die Erfindung betrifft eine Betätigungseinheit nach dem Oberbegriff des Patentanspruchs 1.

Eine derartige, elektromechanisch arbeitende Betätigungseinheit ist aus der internationalen Patentanmeldung WO 99/45292 bekannt. Bei der vorbekannten Betätigungseinheit erfolgt die Kraftübertragung zwischen dem Planetenkäfig und der Gewindespindel mittels einer formschlüssigen Steckverbindung, die torsionssteif, radial nachgiebig und biegeweich an den Planetenkäfig angekoppelt ist.

Als nachteilig wird bei der vorbekannten Betätigungseinheit insbesondere die Tatsache empfunden, daß die erwähnte Steckverbindung nur einen Freiheitsgrad aufweist, so daß sämtliche, von der vom Freiheitsgrad der Steckverbindung abweichenden Störgrößen übertragen werden. Dies führt zur Verschlechterung des erreichbaren Wirkungsgrades.

Es ist daher Aufgabe der vorliegenden Erfindung, eine Betätigungseinheit der eingangs genannten Gattung vorzuschlagen, bei der eine Erhöhung des Wirkungsgrades realisierbar ist.

Diese Aufgabe wird erfindungsgemäß dadurch gelöst, daß die Kraftübertragung zwischen dem Planetenkäfig und der Gewindespindel mittels einer Kupplungswelle erfolgt, deren Enden mit dem Planetenkäfig sowie der Gewindespindel Kardangelenke bilden.

Eine vorteilhafte Anwendung des Erfindungsgegenstandes ist in Patentanspruch 4 erläutert. Die Gewindemutter des Kugelgewindetriebs kann zweiteilig ausgebildet sein, wobei der erste Teil mit dem ersten Reibbelag zusammenwirkt, während in dem zweiten Teil die Umwandlung von Rotations- in Translationsbewegung stattfindet. Dabei ist es besonders vorteilhaft, wenn der Rücklaufbereich für die Kugeln des Kugelgewindetriebs im zweiten Teil ausgebildet ist.

Dabei ist bei einer Ausführung, bei der ein die Gewindemutter umgreifendes Führungsteil vorgesehen ist, das sich an dem den Kugelgewindetrieb aufnehmenden Getriebegehäuse abstützt und an dem sich die Gewindespindel unter Zwischenschaltung eines Axiallagers mittels eines radialen Bundes axial abstützt, besonders vorteilhaft, wenn die Steifigkeit des radialen Bundes und des ihm gegen überliegenden Bereichs des Führungsteiles derart gewählt ist, daß die Laufflächen des Axiallagers im Betrieb eine gleichartige Verformung erfahren. Durch diese Maßnahme wird eine gleichmäßige Verteilung der auf das Axiallager einwirkenden Last erreicht, so daß ein kleines Lager verwendet werden kann, das optimal ausgenutzt wird.

Bei einer vorteilhaften Weiterbildung des Erfindungsgegenstandes, bei der das Führungsteil mit Kraftmeßelementen versehen ist, ist vorgesehen, daß das Führungsteil axiale Nuten aufweist, die den Kraftmeßelementen zugeordnete Leitungen aufnehmen. Dabei ist vorzugsweise in dem dem Reibbelag zugewandten Bereich des Führungsteiles eine elektrische Schnittstelle bzw. ein Stecker angeordnet, an den die Leitungen angeschlossen sind.

Bei einer weiteren Ausgestaltung des Erfindungsgegenstandes ist vorgesehen, daß die Rückführung der Kugeln über alle Gänge erfolgt und daß der Rücklaufbereich für die Kugeln als eine Verdrehsicherung der Gewindemutter im Führungsteil ausgebildet ist. Durch das Zusammenfassen zweier voneinander unabhängigen Funktionsmittel in einem Bauteil wird eine sinnvolle Bauraumoptimierung erreicht.

Außerdem ist es besonders vorteilhaft, wenn das Führungsteil elastisch ausgebildet ist und wenn die Gewindemutter im Führungsteil spielbehaftet angeordnet ist. Durch diese Anordnung wird erreicht, daß die Führung der Gewindemutter nur in ihrem hinteren Bereich mittels der Gewindespindel erfolgt. Die auf die Gewindemutter einwirkenden Störgrößenwerden somit nicht über die Gleitreibung zwischen Gewindemutter und Führungsteil abgestützt.

Die Erfindung wird in der nachfolgenden Beschreibung eines Ausführungsbeispiels unter Bezugnahme auf die beiliegende Zeichnung näher erläutert. In der Zeichnung zeigt:
- Fig. 1: eine Ausführung der erfindungsgemäßen, elektromechanischen Betätigungseinheit im Axialschnitt,
- Fig. 2: eine vereinfachte Darstellung des bei der Ausführung nach Fig. 1 verwendeten ersten Untersetzungsgetriebes.

Die in der Zeichnung dargestellte, elektromechanische Betätigungseinheit nach der Erfindung dient der Betätigung einer Schwimmsattel-Scheibenbremse, deren lediglich schematisch angedeuteter Bremssattel in einem nicht gezeigten feststehenden Halter verschiebbar gelagert ist. Ein Paar von Reibbelägen 4 und 5 ist im Bremssattel derart angeordnet, daß sie der linken und der rechten Seitenfläche einer Bremsscheibe 6 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet. Während der erste Reibbelag 4 mittels eines Betätigungselements 7 durch die Betätigungseinheit direkt mit der Bremsscheibe 6 in Eingriff bringbar ist, wird der zweite Reibbelag 5 durch die Wirkung einer bei der Betätigung der Anordnung vom Bremssattel aufgebrachten Reaktionskraft gegen die gegenüberliegende Seitenfläche der Bremsscheibe 6 gedrückt.

Die erfindungsgemäße Betätigungseinheit, die mittels nicht gezeigter Befestigungsmittel am Bremssattel angebracht ist, weist einen modularen Aufbau auf und besteht im wesentlichen aus drei selbständigen Baugruppen bzw. Modulen, und zwar aus einer Antriebseinheit 1, einem den ersten Reibbe lag 4 betätigenden ersten Untersetzungsgetriebe 2 und einem zwischen der Antriebseinheit 1 und dem ersten Untersetzungsgetriebe 2 wirkungsmäßig geschalteten zweiten Untersetzungsgetriebe 3.

Die vorhin erwähnte Antriebseinheit 1 besteht aus einem Elektromotor 11, der im dargestellten Beispiel als ein permanentmagneterregter, elektronisch kommutierter Motor ausgebildet ist, dessen Stator 9 unbeweglich in einem Motorgehäuse 12 angeordnet ist und dessen Rotor 10 durch einen ringförmigen Träger 13 gebildet ist, der mehrere Permanentmagnetsegmente 14 trägt. Zwischen dem Elektromotor 11 und dem vorhin erwähnten Betätigungselement 7 ist wirkungsmäßig das erste Untersetzungsgetriebe 2 angeordnet, das im gezeigten Beispiel als ein Kugelgewindetrieb 16 bis 18 ausgebildet ist, das in einem Getriebegehäuse 19 gelagert ist, das auch einteilig mit dem vorhin erwähnten Bremssattel ausgeführt sein kann. Der Kugelgewindetrieb besteht dabei aus einer Gewindemutter 16 sowie einer Gewindespindel 17, wobei zwischen der Gewindemutter 16 und der Gewindespindel 17 mehrere Kugeln 18 angeordnet sind, die bei einer Rotationsbewegung der Gewindespindel 17 umlaufen und die Gewindemutter 16 in eine axiale bzw. translatorische Bewegung versetzen. Die Gewindemutter 16 ist dabei vorzugsweise zweiteilig ausgeführt und besteht aus einem ersten Teil 24, das das vorhin erwähnte Betätigungselement 7 bildet, sowie einem zweiten Teil 28, in dem ein Rücklaufbereich bzw. - kanal 25 für die Kugeln 18 ausgebildet ist, in dem die Kugeln 18 ohne Belastung an den Anfang der tragenden Laufbahn zurücklaufen können. Außerdem ist der Zeichnung zu entnehmen, daß die vom Elektromotor 11 über das zweite Untersetzungsgetriebe 3 angetriebene Gewindespindel 17 dreiteilig ausgebildet ist und aus einem mit der Gewindemutter 16 bzw. 28 zusammenwirkenden rohrförmigen ersten Spindelteil 20, einem ringförmigen zweiten Spindelteil 21, sowie einem mit dem zweiten Untersetzungsgetriebe 3 zusammenwirkenden dritten Spindelteil 22 besteht. Das erste Spindelteil 20 begrenzt mit dem zweiten Teil 28 der Gewindemutter 16 wendelförmige Gewinderillen 23, in denen die Kugeln 18 umlaufen.

Die Anordnung ist dabei vorzugsweise derart getroffen, daß der Rotor 10 des Elektromotors 11 unter Zwischenschaltung des zweiten Untersetzungsgetriebes 3 die Gewindespindel 17 antreibt, während das erste Teil 24 der Gewindemutter 16 sich am ersten Reibbelag 4 abstüzt. Der Lagerung des Rotors 10 dienen zwei Radiallager 8, 15, die im Motorgehäuse 12 bzw. in einem Lagerschild 35 angeordnet sind, das sich am Motorgehäuse 12 axial abstützt.

Eine Reduzierung des erforderlichen Motormoments wird bei der in der Zeichnung dargestellten Ausführung der Erfindung durch zweckmäßige Integration eines Planetengetriebes 30 - 34 erreicht, das das vorhin erwähnte zweite Untersetzungsgetriebe 3 bildet. Das Planetengetriebe, das wirkungsmäßig zwischen dem Rotor 10 und der Gewindespindel 17 angeordnet ist, besteht aus einem Sonnenrad 30, das vorzugsweise durch einen am Rotor 10 ausgebildeten, außen verzahnten Bereich 26 gebildet ist, mehreren gestuften Planetenrädern, von denen zwei dargestellt und mit den Bezugszeichen 31 und 32 versehen sind, sowie einem Hohlrad 33. Die gestuften Planetenräder 31, 32, die in einem Planetenkäfig 34 gelagert sind, weisen eine mit dem Sonnenrad 30 zusammenwirkende erste Stufe sowie eine mit dem Hohlrad 33 zusammenwirkende zweite Stufe auf, wobei die erste Stufe durch Zahnräder 31a, 32a größeren Durchmessers und die zweite Stufe durch Zahnräder 31b, 32b kleineren Durchmessers gebildet sind.

Das Hohlrad 33 wird durch einen innenverzahnten Bereich eines das Gehäuse des Planetengetriebes bildenden Deckels 38 gebildet.

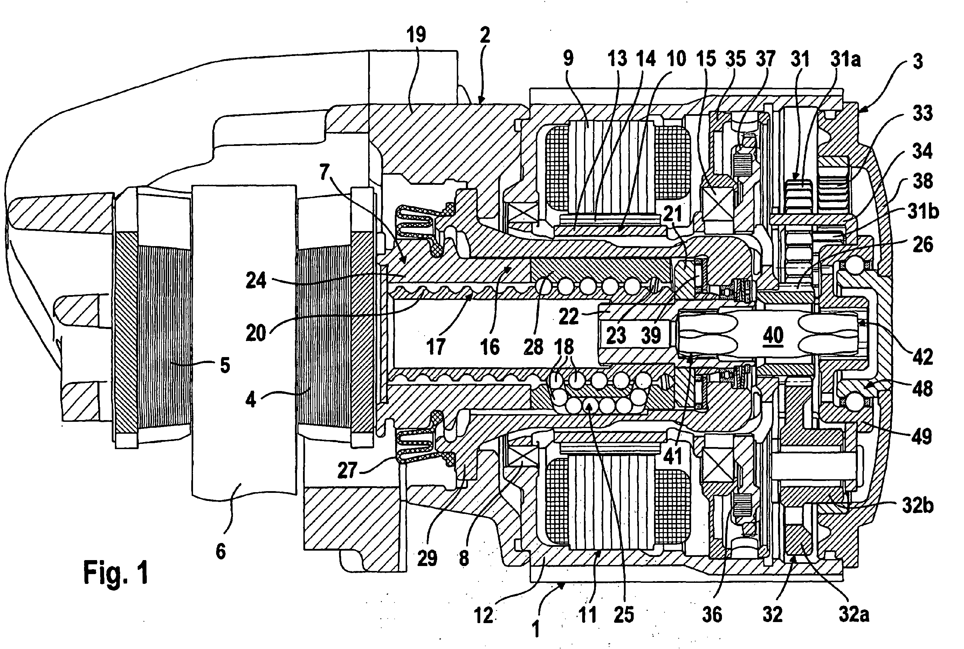

Wie weiterhin der Fig. 1 zu entnehmen ist, ist der Rotor 10 mit einem radialen Kragen 37 versehen, der Komponenten eines nicht näher dargestellten Lageerkennungssystems 36 trägt, mit dessen Hilfe die aktuelle Position des Rotors 10 ermittelt wird: Die Lageinformation wird dann mittels eines Hallsensors oder eines magnetoresistiven Elements ermittelt.

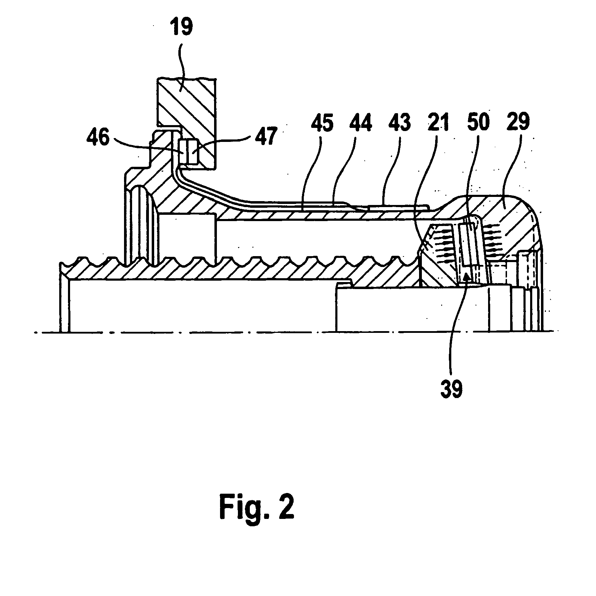

Die vorhin erwähnte Gewindemutter 16 des Kugelgewindetriebs ist dabei vorzugsweise in einem topfförmigen, eine definierte Elastizität aufweisenden Führungsteil 29 mit radialem Spiel angeordnet, so daß ihre Führung mittels der Gewindespindel 17 bzw. 22 erfolgt. Dadurch wird erreicht, daß eine Schiefstellung der Achse des Kugelgewindetriebs, die durch eine Aufbiegung des Bremssattels verursacht wird, durch die elastische Verformung des Führungsteiles 29 und die spielbehaftete, nicht zwangsgeführte Gewindemutter 16 ausgeglichen wird, wodurch sich eine gleichmäßige Flächenpressung der Beläge 4,5 und somit ihre höhere Lebensdauer ergibt. Dabei ist es besonders vorteilhaft, wenn der vorhin erwähnte Rücklaufbereich 25 der Kugeln 18 gleichzeitig als Verdrehsicherung der Gewindemutter 16 im Führungsteil 29 dient. Das zweite ringförmige Spindelteil bzw. Bund 21 stützt sich an einem innerhalb des Führungsteils 29 angeordneten Axiallager 39 ab, wobei die Steifigkeitswerte des Bundes 21 sowie des dem Bund 21 axial gegenüberliegenden Bereichs des Führungsteiles 29 derart aufeinander abgestimmt sind, daß die erwähnten Teile im Betrieb der erfindungsgemäßen Betätigungseinheit gleichartige Verformungen erfahren, so daß die Neigung der beiden Teile gleich ist (s. insbesondere Fig. 2). Durch diese Maßnahme wird eine gleichmäßige Verteilung der Last über den Umfang des Führungsteiles 29 auf die einzelnen Wälzkörper 50 des Axiallagers 39 erreicht, so daß eine maximale Ausnutzung der Tragzahl des Kugelgewindetriebs bei bestmöglichem Wirkungsgrad und optimalem Packaging ermöglicht wird.

Das dritte Spindelteil 22 ist vorzugsweise mittels einer Kupplungswelle 40 mit dem Planetenkäfig 34 des zweiten Untersetzungsgetriebes 3 verbunden. Dabei ist es besonders vorteilhaft, wenn beide Enden der Kupplungswelle 40 sowie die diese Enden aufnehmenden Bereiche des dritten Spindelteiles 22 und des Planetenkäfigs 34 derart ausgebildet sind, daß zwei Kardangelenke 41, 42 gebildet werden. Die Aufnahme des mit dem Planetenkäfig 34 zusammenwirkenden Endes der Kupplungswelle 40 erfolgt dabei vorzugsweise mittels eines Außenringes 49 eines im Deckel 38 vorgesehenen Radiallagers 48. Eine zwischen dem ersten Teil 24 der Gewindemutter 16 und dem Führungsteil 29 eingespannte elastische Dichtung bzw. Dichtmanschette 27 verhindert ein Eindringen von Verunreinigungen ins Innere des Kugelgewindetriebs.

Wie insbesondere Fig. 2 zu entnehmen ist, sind auf der Oberfläche des Führungsteiles 29 Meßelemente 43, beispielsweise Dehnmeßstreifen angeordnet, die die Ermittlung der Betätigungs- bzw. Spannkraft ermöglichen, die indirekt als axiale Deformation (Dehnung) des Führungsteiles 29 gemessen wird. Dem elektrischen Anschluß der Dehnmeßstreifen 43 dienen Leitungen 44, die in in der Oberfläche des Führungsteiles 29 ausgebildeten Nuten 45 angeordnet sind und die zu einer elektrischen Schnittstelle 46 führen. Die Schnittstelle 46 ist vorzugsweise als ein Stecker ausgeführt, der am Führungstopf 29 befestigt ist. Die elektrische Verbindung mit einer nicht dargestellten Auswerteelektronik erfolgt bei der Endmontage mittels eines im Getriebegehäuse 19 integrierten Gegensteckers 47.

Im Rahmen der vorliegenden Erfindung sind selbstverständlich auch zahlreiche Modifikationen denkbar. So kann z. B. der als Antriebseinheit 1 dienende Elektromotor als ein geschalteter Reluktanzmotor (SR-Motor) ausgeführt werden. Vorstellbar sind auch andere Ausführungen des Planetengetriebes, wie etwa ein zweistufiges Differenzplanetengetriebe oder ein Getriebe, dessen Planetenräder mit ihrer ersten Stufe mit einem Sonnenrad und mit ihrer zweiten Stufe unter Zwischenschaltung je eines Stirnrades mit einem Hohlrad im Eingriff stehen. Denkbar sind selbstverständlich auch Getriebe, die mittels eines verformbaren, gezahnten Ringes und einer Exzentrizität große Untersetzungen erzielen.

### Bezugszeichenliste

- 1: Antriebseinheit
- 2: Untersetzungsgetriebe
- 3: Untersetzungsgetriebe
- 4: Reibbelag
- 5: Reibbelag
- 6: Bremsscheibe
- 7: Betätigungselement
- 8: Radiallager
- 9: Stator
- 10: Rotor
- 11: Elektromotor
- 12: Motorgehäuse
- 13: Träger
- 14: Permanentmagnetsegment
- 15: Radiallager
- 16: Gewindemutter
- 17: Gewindespindel
- 18: Kugel
- 19: Getriebegehäuse
- 20: Spindelteil
- 21: Spindelteil
- 22: Spindelteil
- 23: Gewinderille
- 24: Gewindemutterteil
- 25: Rücklaufbereich
- 26: Bereich
- 27: Dichtung
- 28: Gewindemutterteil

- 29: Führungsteil
- 30: Sonnenrad
- 31: Planetenrad
- 31a: Planetenrad
- 31b: Planetenrad
- 32: Planetenrad
- 32a: Planetenrad
- 32b: Planetenrad
- 33: Hohlrad
- 34: Planetenkäfig
- 35: Lagerschild
- 36: Lageerkennungssystem
- 37: Kragen
- 38: Deckel
- 39: Axiallager
- 40: Kupplungswelle
- 41: Kardangelenk
- 42: Kardangelenk
- 43: Meßelement, Dehnmeßstreifen
- 44: Leitung
- 45: Nut
- 46: Schnittstelle, Stecker
- 47: Gegenstecker
- 48: Radiallager
- 49: Außenring
- 50: Wälzkörper

## Patentansprüche

1. Betätigungseinheit mit einem Betätigungselement (7), einem ersten Untersetzungsgetriebe (2), welches von einem Gewindetrieb gebildet wird, der als tragende Wälzkörper in Gewinderillen (23) einer Gewindespindel (17) umlaufende Kugeln (18) sowie einen Rücklaufbereich (25) für die Kugeln (18) aufweist, und mit einem zweiten Untersetzungsgetriebe (3), welches als Planetengetriebe ausgebildet ist, dessen Planetenkäfig (34) mit der Gewindespindel (17) in kraftübertragender Verbindung steht, **dadurch gekennzeichnet, daß** die Kraftübertragung zwischen dem Planetenkäfig (34) und der Gewindespindel (17) mittels einer Kupplungswelle (40) erfolgt, deren Enden mit dem Planetenkäfig (34) sowie der Gewindespindel (17) Kardangelenke (41,42) bilden.

2. Betätigungseinheit nach Anspruch 1 **dadurch gekennzeichnet, daß** ein Ende der Kupplungswelle (40) in einem hohlen Spindelteil (22) der Gewindespindel (17) aufgenommen ist.

3. Betätigungseinheit nach Anspruch 1 **dadurch gekennzeichnet, daß** ein Ende der Kupplungswelle (40) innerhalb des Bereichs des Planetenkäfigs (34) in einem mit dem Planetenkäfig (34) verbundenen Außenring (49) eines Radiallagers (48) aufgenommen ist.

4. Betätigungseinheit nach Anpruch 1, **gekennzeichnet durch** die Verwendung für eine elektromechanisch betätigbare Scheibenbremse für Kraftfahrzeuge, die an einem Bremssattel angeordnet ist, in dem zwei mit je einer Seitenfläche einer Bremsscheibe (6) zusammenwirkende Reibbeläge (4,5) begrenzt verschiebbar angeordnet sind, wobei einer (4) der Reibbeläge (4,5) mittels des Betätigungselementes (7) **durch** die Betätigungseinheit direkt und der andere Reibbelag (5) **durch** die Wirkung einer vom Bremssattel aufgebrachten Reaktionskraft mit der Bremsscheibe (6) in Eingriff bringbar ist, wobei die Betätigungseinheit einen Elektromotor (11) enthält, das erste Untersetzungsgetriebe (2) wirkungsmäßig zwischen dem Elektromotor (11) und dem Betätigungselement (7) angeordnet ist, sowie das zweite Untersetzungsgetriebe (3) zwischen dem Elektromotor (11) und einem Teil des ersten Untersetzungsgetriebes (2) angeordnet ist.

5. Betätigungseinheit nach Anspruch 4, **dadurch gekennzeichnet, daß** die Gewindemutter (16) des Kugelgewindetriebs zweiteilig ausgebildet ist, wobei der erste Teil (24) mit dem ersten Reibbelag (4) zusammenwirkt, während im zweiten Teil (28) die Umwandlung von Rotationsin Translationsbewegung stattfindet.

6. Betätigungseinheit nach Anspruch 5, **dadurch gekennzeichnet, daß** der Rücklaufbereich (25) für die Kugeln (18) des Kugelgewindetriebs im zweiten Teil (28) ausgebildet ist.

7. Betätigungseinheit nach Anspruch 4, 5 oder 6 wobei ein die Gewindemutter (16) umgreifendes Führungsteil (29) vorgesehen ist, das sich an dem den Kugelgewindetrieb aufnehmenden Getriebegehäuse (19) abstützt und an dem sich die Gewindespindel (16) unter zwischenschaltung eines Axiallagers (39) mittels eines radialen Bundes (21) axial abstützt, **dadurch gekennzeichnet, daß** die Steifigkeit des radialen Bundes (21) und des ihm gegen überliegenden Bereichs des Führungsteiles (29) derart gewählt sind, daß die Laufflächen des Axiallagers (39) im Betrieb gleichartige Verformungen erfahren.

8. Betätigungseinheit nach Anspruch 4, wobei am Führungsteil Kraftmeßelemente vorgesehen sind, **dadurch gekennzeichnet, daß** das Führungsteil (29) eine axiale Nut (45) aufweist, die den Kraftmeßelementen (43) zugeordnete Leitungen (44) aufnimmt.

9. Betätigungseinheit nach Anspruch 8, **dadurch gekennzeichnet, daß** in dem dem Reibbelag (4) zugewandten Bereich des Führungsteiles (29) eine elektrische Schnittstelle bzw. ein Stecker (46) angeordnet ist, an den die Leitungen (44) angeschlossen sind.

10. Betätigungseinheit nach Anspruch 6, **dadurch gekennzeichnet, daß** die Rückführung der Kugeln (18) über alle Gänge erfolgt und daß der Rücklaufbereich (25) für die Kugeln (18) als eine Verdrehsicherung der Gewindemutter (16 bzw. 28) im Führungsteil (29) ausgebildet ist.

11. Betätigungseinheit nach einem der Ansprüche 4 bis 10, **dadurch gekennzeichnet, daß** das Führungsteil (29) eine definierte Elastizität aufweist und daß die Gewindemutter (16) im Führungsteil spielbehaftet angeordnet ist.

## Claims

1. Actuating unit with an actuating element (7), a first reducing gear (2) that is provided by a threaded pinion which includes balls (18) as roll bodies in screw thread undercuts (23) of a threaded spindle (17) as well as a return area (25) for the balls (18), and with a second reducing gear (3) which is configured as a planetary gear having a planet cage (34) that is in a force-transmitting connection with the threaded spindle (17),
**characterized in that** the force is transmitted between the planet cage (34) and the threaded spindle (17) by means of a coupling shaft (40), the ends of which form universal joints (41, 42) with the planet cage (34) and the threaded spindle (17).

2. Actuating unit as claimed in claim 1,
**characterized in that** one end of the coupling shaft (40) is accommodated in a hollow spindle member (22) of the threaded spindle (17).

3. Actuating unit as claimed in claim 1,
**characterized in that** one end of the coupling shaft (40) is accommodated within the area of the planet cage (34) in an outside ring (49) of a radial bearing (48) that is connected to the planet cage (34).

4. Actuating unit as claimed in claim 1,
**characterized by** being used for an electromechanically actuated disc brake for automotive vehicles, the said actuating unit being arranged at a brake caliper in which two friction linings (4, 5) that cooperate with each one lateral surface of a brake disc (6) are arranged so as to be displaceable within limits, wherein one (4) of the friction linings (4, 5) is adapted to be moved into engagement with the brake disc (6) by the actuating unit directly by means of the actuating element (7), while the other friction lining (5) is adapted to be moved into engagement with the brake disc by the effect of a reaction force generated by the brake caliper, wherein the actuating unit comprises an electric motor (11), the first reducing gear (2) is arranged between the electric motor (11) and the actuating element (7) in terms of effect, and the second reducing gear (3) is arranged between the electric motor (11) and a part of the first reducing gear (2).

5. Actuating unit as claimed in claim 4,
**characterized in that** the threaded nut (16) of the ball screw has a bipartite design, the first part (24) cooperating with the first friction lining (4), while the conversion of a rotational movement into a translational motion takes place in the second part (28).

6. Actuating unit as claimed in claim 5,
**characterized in that** the return area (25) for the balls (18) of the ball screw is designed in the second part (28).

7. Actuating unit as claimed in claim 4, 5, or 6, wherein a guide member (29) embracing the threaded nut (16) is provided, which is supported on the gear housing (19) that accommodates the ball screw and on which the threaded spindle (16) is axially supported by means of a radial bead (21) by the intermediary of an axial bearing (39),
**characterized in that** the rigidity of the radial bead (21) and of the opposite area of the guide member (29) are chosen so that the contact surfaces of the axial bearing (39) suffer from equal deformations during operation.

8. Actuating unit as claimed in claim 4, wherein force measuring elements are provided at the guide member,
**characterized in that** the guide member (29) includes an axial groove (45) that receives conduits (44) associated with the force measuring elements (43).

9. Actuating unit as claimed in claim 8,
**characterized in that** an electric interface or a plug (46), to which the conduits (44) are connected, is arranged in the area of the guide member (29) facing the friction lining (4).

10. Actuating unit as claimed in claim 6,
**characterized in that** the balls (18) are returned through all raceways, and **in that** the return area (25) for the balls (18) is configured as a rotation prevention mechanism of the threaded nut (16 or 28) in the guide member (29).

11. Actuating unit as claimed in any one of claims 4 to 10,
**characterized in that** the guide member (29) has a defined elasticity, and **in that** the threaded nut (16) is arranged with play in the guide member.

## Revendications

1. Unité d'actionnement comportant un élément d'actionnement (7), un premier démultiplicateur (2) qui est formé par un mécanisme à broche filetée qui, en tant que corps de roulement porteur, comporte des billes (18) circulant dans des gorges (23) du filet d'une broche filetée (17), ainsi qu'une zone de retour (25) pour les billes (18), et comportant un deuxième démultiplicateur (3) qui est réalisé sous la forme d'un engrenage planétaire dont la cage (34) est en liaison de transmission des forces avec la broche filetée (17), **caractérisée en ce que** la transmission des forces entre la cage planétaire (34) et la broche filetée (17) s'effectue au moyen d'un arbre d'accouplement (40) dont les extrémités forment des articulations de cardan (41, 42) avec la cage planétaire (34) ainsi que la broche filetée (17).

2. Unité d'actionnement selon la revendication 1, **caractérisée en ce qu'**une extrémité de l'arbre d'accouplement (40) est reçue dans une partie de broche (22) creuse de la broche filetée (17).

3. Unité d'actionnement selon la revendication 1, **caractérisée en ce qu'**une extrémité de l'arbre d'accouplement (40) est reçue à l'intérieur de la zone de la cage planétaire (34), dans un anneau extérieur (49), relié à la cage planétaire (34), d'un palier radial (48).

4. Unité d'actionnement selon la revendication 1, **caractérisée par** son utilisation pour un frein à disque à actionnement électromagnétique pour véhicule automobile, lequel est disposé sur un étrier de frein dans lequel deux garnitures de friction (4, 5), coopérant chacune avec une surface latérale d'un disque de frein (6), sont disposées de manière à pouvoir coulisser dans une mesure limitée, l'une (4) des garnitures de friction (4, 5) pouvant être amenée en prise avec le disque de frein (6) au moyen de l'élément d'actionnement (7) directement par l'unité d'actionnement et l'autre garniture de frein (5) par l'action d'une force de réaction appliquée par l'étrier de frein, l'unité d'actionnement contenant un moteur électrique (11), le premier démultiplicateur (2) étant disposé de manière inactive entre le moteur électrique (11) et l'élément d'actionnement (7), et le deuxième démultiplicateur (3) étant disposé entre le moteur électrique (11) et une partie du premier démultiplicateur (2).

5. Unité d'actionnement selon la revendication 4, **caractérisée en ce que** l'écrou taraudé (16) du mécanisme à broche filetée et billes est réalisé en deux parties, la première partie (24) coopérant avec la première garniture de friction (4), tandis que dans la deuxième partie (28) a lieu la transformation du mouvement de rotation en mouvement de translation.

6. Unité d'actionnement selon la revendication 5, **caractérisée en ce que** la zone de retour (25) pour les billes (18) du mécanisme à broche filetée et billes est réalisée dans la deuxième partie (28).

7. Unité d'actionnement selon la revendication 4, 5 ou 6, dans laquelle est prévue une pièce de guidage (29), entourant l'écrou taraudé (16), qui prend appui contre le boîtier de transmission (19) recevant le mécanisme à broche filetée et billes, et contre laquelle la broche filetée (16) prend appui axialement par interposition d'un palier axial (39), au moyen d'un épaulement radial (21), **caractérisée en ce que** la rigidité de l'épaulement radial (21) et de la zone qui lui est opposée de la pièce de guidage (29) est choisie de manière que les surfaces de roulement du palier axial (39) subissent pendant le fonctionnement des déformations de même type.

8. Unité d'actionnement selon la revendication 4, dans laquelle des éléments de mesure de force sont prévus sur la pièce de guidage, **caractérisée en ce que** la pièce de guidage (29) présente une rainure axiale (45) qui reçoit des lignes (44) associées aux éléments de mesure de force (43).

9. Unité d'actionnement selon la revendication 8, **caractérisée en ce que** dans la zone de la pièce de guidage (29), tournée vers la garniture de friction (4), est disposée une interface électrique ou un connecteur (46) auquel sont raccordées les lignes (44).

10. Unité d'actionnement selon la revendication 6, **caractérisée en ce que** le retour des billes (18) s'effectue sur tous les filets et **en ce que** la zone de retour (25) pour les billes (18) est réalisée dans la pièce de guidage (29) sous la forme d'un blocage en rotation de l'écrou taraudé (16 ou 28).

11. Unité d'actionnement selon l'une des revendications 4 à 10, **caractérisée en ce que** la pièce de guidage (29) présente une élasticité définie et **en ce que** l'écrou taraudé (16) est disposé avec jeu dans la pièce de guidage.
